# FASCICULE DE BREVET EUROPEEN

(11) **EP 3 802 288 B1**
(45) Date de publication et mention de la délivrance du brevet: **13.09.2023**
(21) Numéro de dépôt: 19790582.1
(22) Date de dépôt: 17.04.2019
(51) Int. Cl.: B62D 21/15, B62D 25/20

(54) **VEHICULE AVEC ELEMENT DE RENFORT SOUS-PLANCHER POUR LOGEMENT DE BATTERIE DE PROPULSION**
FAHRZEUG MIT EINEM UNTERBODENVERSTÄRKUNGSELEMENT FÜR EIN ANTRIEBSBATTERIEGEHÄUSE
VEHICLE COMPRISING AN UNDERFLOOR REINFORCING ELEMENT FOR A DRIVE BATTERY HOUSING

(30) Priorité: 24.05.2018 FR 1854420
(43) Date de publication de la demande: 14.04.2021
(73) Titulaire: PSA Automobiles SA, 78300 Poissy (FR)
(72) Inventeur: PERU, Marc, 92290 CHATENAY MALABRY (FR)
(86) Numéro de dépôt international: PCT/FR2019/050911
(87) Numéro de publication internationale: WO 2019/224445

(56) Documents cités:
- DE-A1-102012 203 882
- FR-A1- 2 710 893
- JP-A- H10 291 419

## Description

L'invention a trait au domaine des véhicules automobiles, plus particulièrement à leurs structures en vue de l'absorption de l'énergie d'impact en cas de choc.

Parmi les éléments de structure du soubassement d'un véhicule, le brancard sous-plancher est conçu pour transmettre le plus d'efforts en cas de choc frontal. La section de ce corps creux est celle qui montre une proximité au sol la plus importante. Cela ne pose aucun problème dans les véhicules à motorisation thermique, mais limite les possibilités d'implantation de batteries sous-plancher dans le cadre de véhicules de type hybride ou électrique. Les batteries doivent alors enjamber les brancards sous-plancher, ce qui limite le nombre ou la taille des modules de batteries pouvant être implantés.

Une solution pour augmenter la taille des batteries sous-plancher d'un véhicule est non pas d'enjamber les brancards sous-plancher mais de les couper. Le relais pour le passage d'effort serait alors pris par la coque de la batterie ou par des cadres de protection conçus et agencés à cet effet. Néanmoins, le fait de couper les brancards sous-plancher présente le risque de dégrader la tenue du soubassement lors des chocs frontaux, comme par exemple en cas de choc frontal à 40% de recouvrement ou en cas de choc frontal de type « small overlap » dans lesquels seul 25 % de l'avant du véhicule est recouvert par l'obstacle. Une solution reste donc à trouver pour pouvoir garantir la tenue du soubassement lors de tels types de chocs frontaux.

L'invention a pour objectif de répondre aux problèmes de l'art antérieur en proposant un nouveau véhicule hybride ou électrique dont la structure du soubassement est adaptée à la fois à l'implantation de batteries de taille importante et au maintien de bonnes prestations en cas de choc frontal.

Le document JPH10291419 décrit un soubassement de véhicule comportant deux longerons latéraux, entre lesquels sont installés des bacs de batterie. Des brancards avant comportent des extrémités arrières en vis-à-vis de certains de ces bacs.

A cet effet et selon un premier aspect, l'invention a pour objet un véhicule hybride ou électrique comprenant un plancher, des longerons de bas de caisse s'étendant le long des deux bords latéraux du plancher, des brancards sous-plancher entre lesdits longerons de bas de caisse, et au moins une batterie de propulsion agencée sous le plancher entre les longerons de bas de caisse, le véhicule étant remarquable en ce qu'au moins un brancard sous-plancher a une de ses extrémités disposée en regard d'une des faces d'une ou de la batterie de propulsion et en ce que le véhicule comprend en outre au moins un élément de renfort fixé sous ledit plancher et s'étendant transversalement depuis l'un des brancards sous-plancher. Selon l'invention, au moins un élément de renfort se présente sous forme d'équerre dont un des côtés est agencé pour se placer en regard d'un des côtés longitudinaux d'un brancard sous-plancher.

Idéalement, un des côtés de l'équerre est agencé pour se placer enappui d'un des côtés longitudinaux du brancard sous-plancher. La structure en formed'équerre, ou comprenant au moins une équerre, du ou des éléments de renfort optimise leur action en matière de renforcement du plancher et du brancard sous-plancher.

On notera que l'emploi de structures de renfort en forme d'équerre est déjà connu du document JP4283780, mais avec un positionnement et une finalité différente de celle de l'invention.

Comme on l'aura compris à la lecture de la définition qui vient d'en être donnée, l'invention propose une structure de soubassement de véhicule montrant, d'une part, des brancards sous-plancher courts, de sorte à ne pas gêner l'implantation de batteries sous-plancher de taille importante, et d'autre part, montrant un ou plusieurs éléments de renfort venant rigidifier le plancher du véhicule à proximité desdits brancards sous-plancher, de sorte à garantir les prestations en matière de tenue aux chocs frontaux.

Il a été montré que les brancards sous-plancher courts présentaient une instabilité en flexion et un risque de flambage lors des chocs frontaux. L'invention propose d'améliorer la tenue de la structure de soubassement par le biais d'un ou plusieurs éléments de renfort transversaux disposés adjacents à au moins un des brancards sous-plancher. Ce ou ces éléments de renfort transversaux vont rigidifier la structure du plancher en amont de la batterie en étant directement fixés audit plancher.

Selon un mode de réalisation préféré, au moins un élément de renfort est agencé entre un brancard sous-plancher et un longeron de bas de caisse, ou entre un brancard sous-plancher et un tunnel central, ou entre deux brancards sous-plancher.

Idéalement, au moins un brancard sous-plancher est intercalé entre au moins deux éléments de renfort. De manière avantageuse, le véhicule comprend en outre une bride reliée aux deux éléments de renfort et recouvrant partiellement le brancard sous-plancher. Cette configuration permet d'améliorer la tenue du brancard sous-plancher selon la direction verticale.

Selon un mode de réalisation, au moins un élément de renfort est agencé entre un brancard sous-plancher et un longeron de bas de caisse et ledit élément de renfort s'étend transversalement sur plus de 80% de la distance entre ledit brancard sous-plancher et ledit longeron de bas de caisse. De préférence, ledit élément de renfort se place en appui contre ledit brancard sous-plancher et/ou le longeron de bas de caisse.

Avantageusement, le véhicule comprenant des liaisons sous-plancher formant des bossages, le véhicule est remarquable en ce qu'au moins un élément de renfort est agencé entre un brancard sous-plancher et un longeron de bas de caisse et en ce que ledit élément de renfort est agencé pour s'étendre transversalement le long des liaisons sous-plancher. Cette configuration permet aux éléments de renfort d'offrir une retenue supplémentaire des liaisons sous-plancher.

Selon un mode de réalisation pouvant être complémentaire des précédents, le véhicule comprenant un tunnel central, le véhicule est remarquable en ce qu'au moins un élément de renfort est agencé entre un brancard sous-plancher et le tunnel central, et ledit élément de renfort s'étend transversalement sur plus de 80% de la distance entre ledit brancard sous-plancher et le tunnel central. De préférence, ledit élément de renfort se place en appui contre ledit brancard sous-plancher.

Selon encore un mode de réalisation pouvant être complémentaire des précédents, le véhicule comprenant deux brancards sous-plancher, le véhicule est remarquable en ce qu'au moins un élément de renfort est agencé entre lesdits brancards sous-plancher, et en ce que ledit élément de renfort s'étend transversalement sur plus de 80% de la distance entre lesdits brancards sous-plancher. De préférence, ledit élément de renfort se place en appui contre lesdits brancards sous-plancher.

Préférentiellement, l'élément de renfort s'étendant entre les brancards sous-plancher comprend au moins une paire d'équerres, de préférence encore une paire de doubles équerres.

Selon une mise en oeuvre préférée de l'invention, au moins un des éléments de renfort est un profilé métallique, de préférence de section fermée.

L'invention sera bien comprise et d'autres aspects et avantages apparaîtront clairement à lecture de la description qui suit donnée en référence aux planches de dessins annexées sur lesquelles :
- La figure 1 est une vue schématique de dessous d'un véhicule selon l'invention montrant l'implantation des batteries du véhicule et des éléments de renfort.
- La figure 2 est une vue partielle en perspective similaire à celle de la figure 1.
- La figure 3 est une vue similaire à celle de la figure 2, illustrant la variante de l'invention avec bride.
- La figure 4 est une vue analogue à celle de la figure 1 montrant un élément de renfort s'étendant entre deux brancards sous-plancher.

Dans la description qui suit, le terme « comprendre » est synonyme de « inclure » et n'est pas limitatif en ce qu'il autorise la présence d'autres éléments dans le véhicule auquel il fait référence. Il est entendu que le terme « comprendre » inclut les termes « consister en ». Sur les différentes figures, les mêmes références désignent des éléments identiques ou similaires. Les termes « longitudinal » et « transversal » s'entendront par rapport à l'orientation générale du véhicule. Le terme « avant » indiquera un positionnement orienté vers le devant d'un véhicule tel que pris dans sa direction normale de roulage et le terme « arrière » indiquera un positionnement orienté vers l'arrière d'un véhicule selon la même direction.

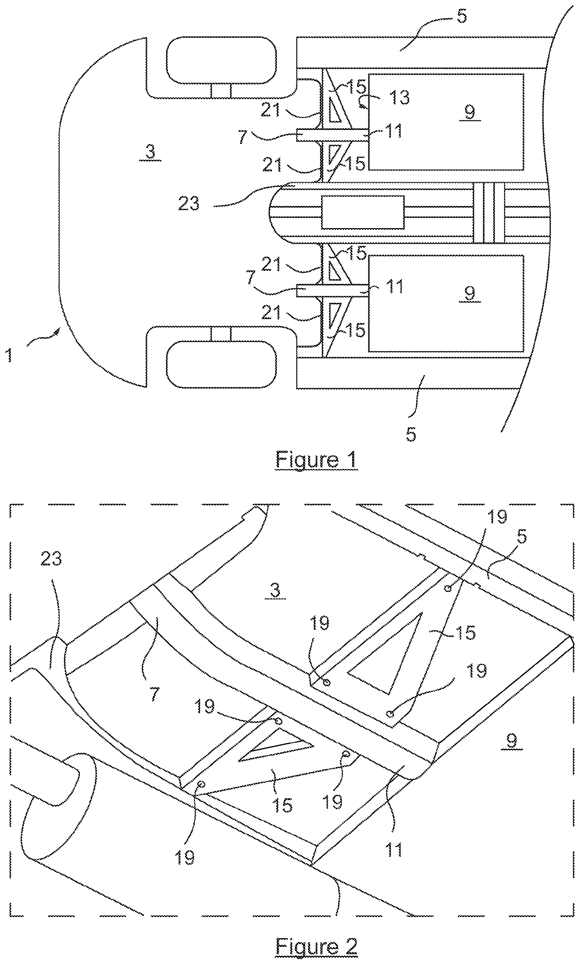

On se référera en premier lieu aux figures 1 et 2 illustrant un véhicule 1 selon l'invention. Le véhicule 1 est un véhicule hybride ou électrique comprenant un plancher 3, des longerons 5 de bas de caisse s'étendant le long des deux bords latéraux du plancher 3, des brancards 7 sous-plancher s'étendant longitudinalement entre lesdits longerons 5 de bas de caisse, et au moins une batterie 9 de propulsion agencée sous le plancher 3 entre les longerons 5 de bas de caisse. Dans l'exemple illustré, le véhicule est un véhicule hybride comprenant à la fois une motorisation thermique et une motorisation électrique. Le véhicule 1 comprend alors deux batteries 9 de propulsion, tout en conservant la ligne d'échappement entre lesdites batteries 9 agencée dans le tunnel central 23. Néanmoins, l'homme du métier adaptera sans problème l'invention à un véhicule électrique, dépourvu de ligne d'échappement et dont la batterie s'étend de manière transversale d'un longeron de bas de caisse à l'autre, c'est-à-dire sur presque toute la largeur du véhicule.

Selon l'invention, au moins un brancard 7 sous-plancher a une de ses extrémités 11, à savoir l'extrémité arrière, disposée en regard d'une des faces 13 d'une ou de la batterie 9 de propulsion, à savoir la face avant. L'invention va ainsi mettre en oeuvre des brancards 7 sous-plancher courts, de sorte à ce qu'ils ne s'étendent pas sous la batterie 9. Le véhicule 1 comprend en outre au moins un élément de renfort 15 fixé sous ledit plancher 3 et s'étendant transversalement depuis l'un des brancards 7 sous-plancher.

De préférence, au moins un élément de renfort 15 est agencé entre un brancard 7 sous-plancher et un longeron 5 de bas de caisse, ou entre un brancard 7 sous-plancher et le tunnel central, ou entre deux brancards 7 sous-plancher. L'invention propose un dispositif modulable en ce que le nombre et la disposition des éléments de renfort 15 peuvent être adaptés aux besoins du véhicule considéré. Néanmoins, selon une mise en oeuvre préférée de l'invention, au moins un brancard 7 sous-plancher est intercalé entre au moins deux éléments de renfort 15. Le brancard 7 sous-plancher est alors pris « en sandwich » entre les deux éléments de renfort 15 qui vont le maintenir selon ses deux côtés longitudinaux et donc rigidifier sa tenue transversalement.

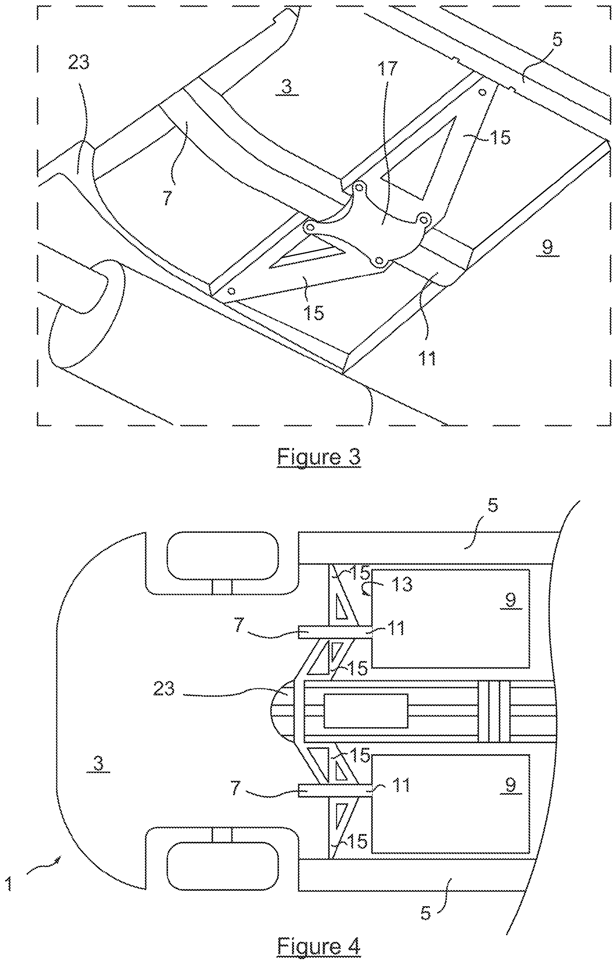

Selon une variante préférée de l'invention illustrée en figure 3, le véhicule 1 comprend en outre au moins une bride 17 reliée aux deux éléments de renfort 15 disposés de part et d'autre d'un brancard 7 sous-plancher de sorte à le recouvrir partiellement. L'utilisation d'une ou plusieurs brides 17 permet de renforcer encore la tenue brancard 7 sous-plancher en lui offrant un maintien selon la direction verticale. Le brancard 7 sous-plancher est alors pris « en sandwich » entre le plancher 3 et la ou lesdites brides 17 selon la direction verticale. La ou les brides 17 sont constituées, par exemple, par une tôle d'acier à haute limite d'élasticité d'une épaisseur suffisante pour leur fonction (par exemple entre 1 et 1.5 mm). La ou les brides 17 enjambent ledit brancard 7 sous-plancher et sont fixées sur les éléments de renfort 15 par vissage, par soudage ou par tout autre moyen d'assemblage connu de l'homme du métier.

Selon une mise en oeuvre préférée de l'invention, au moins un des éléments de renfort 15 est un profilé métallique, idéalement en acier. De préférence, le profilé présente une section fermée en carré ou en rectangle, de dimensions allant de 20 à 50 mm. D'autres types de profilés sont envisageables, par exemple des profilés présentant une section en U ou en T.

L'élément de renfort 15 selon l'invention s'étend transversalement et peut présenter différentes formes comme une simple poutre ou une forme en T ou en H. Selon un mode de réalisation préféré, le ou au moins un élément de renfort 15 se présente sous forme d'équerre, ou comprend au moins une partie sous forme d'équerre. L'élément de renfort 15 est alors agencé pour qu'un des côtés soit placé en regard d'un des côtés longitudinaux du brancard 7 sous-plancher qu'il vient renforcer. De préférence, un des côtés de l'équerre est agencé pour se placer en appui d'un des côtés longitudinaux du brancard 7 sous-plancher que l'élément de renfort 15 vient maintenir. Cette configuration offre une surface de tenue du brancard 7 sous-plancher plus importante et limite les effets de cisaillement en cas de choc frontal.

On notera que pour jouer pleinement leur fonction de structure de rigidification, le ou les éléments de renfort 15 sont fixés directement au plancher 3 et non pas au brancard 7 sous-plancher qu'ils viennent maintenir. Une fixation entre ledit brancard 7 sous-plancher et le ou les éléments de renfort 15 est néanmoins envisageable dans le cadre de l'invention en complément de la fixation au plancher 3. Cette fixation peut se faire par tout moyen, par exemple par soudage. Dans une mise en oeuvre préférée de l'invention, les éléments de renfort 15 sont fixés au plancher 3 par l'intermédiaire de moyens de fixation, par exemple des vis 19 de fixation. L'emploi d'éléments de renfort 15 en forme d'équerre offre des possibilités de fixation isostatique en trois points non-alignés.

Selon un mode de réalisation préféré, au moins un élément de renfort 15 est agencé entre un brancard 7 sous-plancher et un longeron 5 de bas de caisse et ledit élément de renfort 15 s'étend transversalement sur plus de 80% de la distance entre ledit brancard 7 sous-plancher et ledit longeron 5 de bas de caisse. L'existence d'un jeu entre l'élément de renfort 15 et le brancard 7 sous-plancher ou entre l'élément de renfort 15 et le longeron 5 de bas de caisse est possible et facilite le montage dudit élément de renfort 15. Néanmoins, préférentiellement, ledit élément de renfort 15 se place en appui contre ledit brancard 7 sous-plancher et/ou le longeron 5 de bas de caisse.

Lorsque la structure du véhicule 1 comprend des liaisons sous-plancher 21 formant des bossages (visibles en figure 1), l'homme du métier aura avantage à ce qu'au moins un élément de renfort 15 soit agencé entre un brancard 7 sous-plancher et un longeron 5 de bas de caisse de manière à s'étendre transversalement le long des liaisons 21 sous-plancher. Ainsi, en cas de choc frontal, les liaisons 21 sous-plancher vont se placer en appui contre ledit élément de renfort 15.

Selon un autre mode de réalisation préféré, au moins un élément de renfort 15 est agencé entre un brancard 7 sous-plancher et le tunnel central 23 et ledit élément de renfort 15 s'étend transversalement sur plus de 80% de la distance entre ledit brancard 7 sous-plancher et le tunnel central 23. Comme dans le mode de réalisation précédent, l'existence d'un jeu est possible, mais de préférence ledit élément de renfort 15 se place en appui contre ledit brancard 7 sous-plancher. En cas d'absence de tunnel central, lorsque le véhicule est un véhicule électrique, un élément de renfort s'étendra selon l'axe transversal du véhicule de sorte à se placer entre les deux brancards sous-plancher. De manière alternative ou complémentaire, deux éléments de renfort peuvent être alignés successivement selon l'axe transversal du véhicule.

Il est donc possible de concevoir, comme illustré en figure 4, des éléments de renfort 15 agencés entre lesdits brancards 7 sous-plancher, de sorte à ce que ledit élément de renfort 15 s'étende transversalement sur plus de 80% de la distance entre lesdits brancards 7 sous-plancher. De préférence, ledit élément de renfort 15 se place en appui contre lesdits brancards 7 sous-plancher. Cette configuration est avantageuse en ce qu'elle propose une nouvelle voie de passage d'efforts entre les deux brancards sous-plancher. Elle peut être mise en oeuvre aussi bien en l'absence de tunnel central pour des véhicules électriques, qu'en présence d'un tel tunnel central qu'elle va renforcer. Le renfort sous-tunnel est alors configuré pour contourner le silencieux du circuit d'échappement.

Selon un mode de réalisation préféré, l'élément de renfort 15 s'étendant entre les brancards 7 sous-plancher comprend au moins une paire d'équerres, chacune des équerres comprend un côté placé en regard d'un des côtés longitudinaux du brancard 7 sous-plancher qu'elle vient renforcer. De préférence, l'élément de renfort 15 comprend une paire de doubles équerres pour un maintien renforcé, chaque double équerre se présentant sous une forme de rectangle ou de parallélogramme.

## Revendications

1. Véhicule (1) hybride ou électrique comprenant un plancher (3), des longerons (5) de bas de caisse s'étendant le long des deux bords latéraux du plancher (3), des brancards (7) sous-plancher entre lesdits longerons (5) de bas de caisse, au moins une batterie (9) de propulsion agencée sous le plancher (3) entre les longerons (5) de bas de caisse et au moins un brancard (7) sous-plancher ayant une de ses extrémités disposée en regard d'une des faces d'une ou de la batterie (9) de propulsion, le véhicule (1) comprenant en outre au moins un élément de renfort (15) fixé sous ledit plancher (3) et s'étendant transversalement depuis l'un des brancards (7) sous-plancher, **caractérisé en ce qu'**au moins un élément de renfort (15) se présente sous forme d'équerre dont un des côtés est agencé pour se placer en regard d'un des côtés longitudinaux d'un brancard (7) sous-plancher.

2. Véhicule (1) selon la revendication 1, **caractérisé en ce qu'**au moins un élément de renfort (15) est agencé entre un brancard (7) sous-plancher et un longeron (5) de bas de caisse, ou entre un brancard (7) sous-plancher et un tunnel central (23), ou entre deux brancards (7) sous-plancher.

3. Véhicule (1) selon l'une des revendications 1 ou 2, **caractérisé en ce qu'**au moins un brancard (7) sous-plancher est intercalé entre au moins deux éléments de renfort (15), de préférence le véhicule (1) comprend en outre au moins une bride (17) reliée aux deux éléments de renfort (15) et recouvrant partiellement le brancard (7) sous-plancher.

4. Véhicule (1) selon l'une des revendications 1 à 3, **caractérisé en ce qu'**au moins un élément de renfort (15) est agencé entre un brancard (7) sous-plancher et un longeron (5) de bas de caisse et **en ce que** ledit élément de renfort (15) s'étend transversalement sur plus de 80% de la distance entre ledit brancard (7) sous-plancher et ledit longeron (5) de bas de caisse, de préférence ledit élément de renfort (15) se place en appui contre ledit brancard (7) sous-plancher et/ou le longeron (5) de bas de caisse.

5. Véhicule (1) selon l'une des revendications 1 à 4, le véhicule (1) comprenant des liaisons sous-plancher (21) formant des bossages, le véhicule est **caractérisé en ce qu'**au moins un élément de renfort (15) est agencé entre un brancard (7) sous-plancher et un longeron (5) de bas de caisse et **en ce que** ledit élément de renfort (15) est agencé pour s'étendre transversalement le long des liaisons sous-plancher.

6. Véhicule (1) selon l'une des revendications 1 à 5, le véhicule comprenant un tunnel central, **caractérisé en ce qu'**au moins un élément de renfort (15) est agencé entre un brancard (7) sous-plancher et le tunnel central, et **en ce que** ledit élément de renfort (15) s'étend transversalement sur plus de 80% de la distance entre ledit brancard (7) sous-plancher et le tunnel central, de préférence ledit élément de renfort (15) se place en appui contre ledit brancard (7) sous-plancher.

7. Véhicule (1) selon l'une des revendications 1 à 6, le véhicule (1) comprenant deux brancards (7) sous-plancher, le véhicule est **caractérisé en ce qu'**au moins un élément de renfort (15) est agencé entre lesdits brancards (7) sous-plancher, et **en ce que** ledit élément de renfort (15) s'étend transversalement sur plus de 80% de la distance entre lesdits brancards (7) sous-plancher ; de préférence ledit élément de renfort (15) se place en appui contre lesdits brancards (7) sous-plancher.

8. Véhicule (1) selon la revendication 7, **caractérisé en ce que** l'élément de renfort (15) s'étendant entre les brancards (7) sous-plancher comprend au moins une paire d'équerres, de préférence encore une paire de doubles équerres.

9. Véhicule (1) selon l'une des revendications 1 à 8, **caractérisé en ce qu'**au moins un des éléments de renfort (15) est un profilé métallique, de préférence de section fermée.

## Patentansprüche

1. Hybrid- oder Elektrofahrzeug (1) mit einem Boden (3), sich entlang der beiden Seitenränder des Bodens (3) erstreckenden Unterbodenlängsträgern (5), Unterbodenträgern (7) zwischen den Unterbodenlängsträgern (5), mindestens einer unter dem Boden (3) zwischen den Unterbodenlängsträgern (5) angeordneten Antriebsbatterie (9) und mindestens einem Unterbodenträger (7), dessen eines Ende einer Seite der einen oder der anderen Seite der Antriebsbatterie (9) gegenüberliegt, wobei das Fahrzeug (1) ferner mindestens umfasst Versteifungselement (15), das unter dem Boden (3) befestigt ist und sich quer von einem der Unterbodenbänder (7) erstreckt, **dadurch gekennzeichnet, dass** mindestens ein Versteifungselement (15) in Form eines Winkels ausgebildet ist, dessen eine Seite so angeordnet ist, dass sie einer der Längsseiten eines Unterbodenbands (7) gegenüberliegt.

2. Fahrzeug (1) nach Anspruch 1, **dadurch gekennzeichnet, dass** mindestens ein Verstärkungselement (15) zwischen einem Unterbodengestell (7) und einem Unterbodenlängsträger (5) oder zwischen einem Unterbodengestell (7) und einem Mitteltunnel (23) oder zwischen zwei Unterbodengestellen (7) angeordnet ist.

3. Fahrzeug (1) nach einem der Ansprüche 1 oder 2, **dadurch gekennzeichnet, dass** zwischen mindestens zwei Verstärkungselementen (15) mindestens ein Unterbodenständer (7) angeordnet ist, vorzugsweise das Fahrzeug (1) ferner mindestens einen Flansch (17) aufweist, der mit den beiden Verstärkungselementen (15) verbunden ist und den Unterbodenständer (7) teilweise abdeckt.

4. Fahrzeug (1) nach einem der Ansprüche 1 bis 3, **dadurch gekennzeichnet, dass** mindestens ein Verstärkungselement (15) zwischen einem Unterbodengestell (7) und einem Unterbodenlängsträger (5) angeordnet ist und dass sich das Verstärkungselement (15) quer über mehr als 80% des Abstands zwischen dem Unterbodengestell (7) und dem Unterbodenlängsträger (5) erstreckt, wobei vorzugsweise das Verstärkungselement (15) an dem Unterbodengestell (7) und/oder dem Unterbodenlängsträger (5) anliegt Kassenboden.

5. Fahrzeug (1) nach einem der Ansprüche 1 bis 4, wobei das Fahrzeug (1) Unterbodenverbindungen (21) aufweist, die Erhebungen bilden, das Fahrzeug **dadurch gekennzeichnet ist, dass** mindestens ein Verstärkungselement (15) zwischen einem Unterbodengestell (7) und einem Unterbodenholm (5) angeordnet ist, und dass das Verstärkungselement (15) so angeordnet ist, dass es sich quer entlang der Unterbodenverbindungen erstreckt.

6. Fahrzeug (1) nach einem der Ansprüche 1 bis 5, wobei das Fahrzeug einen Mitteltunnel umfasst, **dadurch gekennzeichnet, dass** mindestens ein Verstärkungselement (15) zwischen einem Unterbodenständer (7) und dem Mitteltunnel angeordnet ist, und dass sich das Verstärkungselement (15) quer über mehr als 80% des Abstands zwischen dem Unterbodenständer (7) und dem Mitteltunnel erstreckt, wobei vorzugsweise das Verstärkungselement (15) an dem Unterbodenständer (7) anliegt.

7. Fahrzeug (1) nach einem der Ansprüche 1 bis 6, wobei das Fahrzeug (1) zwei Unterbodenleisten (7) umfasst, das Fahrzeug **dadurch gekennzeichnet ist, dass** mindestens ein Verstärkungselement (15) zwischen den Unterbodenleisten (7) angeordnet ist, und dass sich das Verstärkungselement (15) quer über mehr als 80% des Abstands zwischen den Unterbodenleisten (7) erstreckt; vorzugsweise das Verstärkungselement (15) in Anlage an die Unterbodenleisten (7) kommt.

8. Fahrzeug (1) nach Anspruch 7, **dadurch gekennzeichnet, dass** das Verstärkungselement (15), das sich zwischen den Unterbodenstreben (7) erstreckt, mindestens ein Paar von Winkeln, vorzugsweise noch ein Paar von Doppelwinkeln, umfasst.

9. Fahrzeug (1) nach einem der Ansprüche 1 bis 8, **dadurch gekennzeichnet, dass** mindestens eines der Verstärkungselemente (15) ein Metallprofil, vorzugsweise mit geschlossenem Querschnitt, ist.

## Claims

1. Hybrid or electric vehicle (1) comprising a floor (3), lower body side rails (5) extending along the two lateral edges of the floor (3), underfloor side rails (7) between said lower body side rails (5), at least one propulsion battery (9) arranged under the floor (3) between the lower body side rails (5) and at least one underfloor side rail (7) having one of its ends arranged facing one of the faces of one or of the propulsion battery (9), the vehicle (1) further comprising at least one reinforcing element (15) under said floor (3) and extending transversely from one of the sub-floor side members (7), **characterized in that** at least one reinforcing element (15) is in the form of a bracket, one of the sides of which is arranged to be placed facing one of the longitudinal sides of a sub-floor side member (7).

2. Vehicle (1) according to claim 1, **characterized in that** at least one reinforcing element (15) is arranged between a subfloor side-piece (7) and a lower body side-piece (5), or between a subfloor side-piece (7) and a central tunnel (23), or between two subfloor side-pieces (7).

3. Vehicle (1) according to either of claims 1 and 2, **characterized in that** at least one underfloor stretcher (7) is inserted between at least two reinforcing elements (15), preferably the vehicle (1) further comprises at least one flange (17) connected to the two reinforcing elements (15) and partially covering the underfloor stretcher (7).

4. Vehicle (1) according to one of claims 1 to 3, **characterized in that** at least one reinforcement element (15) is arranged between a subfloor strut (7) and a lower body spar (5) and **in that** the said reinforcement element (15) extends transversely over more than 80% of the distance between the said subfloor strut (7) and the said lower body spar (5), preferably the said reinforcement element (15) is placed in abutment against the said subfloor strut (7) and/or the lower body spar (5).

5. Vehicle (1) according to one of claims 1 to 4, the vehicle (1) comprising subfloor connections (21) forming bosses, the vehicle is **characterized in that** at least one reinforcing element (15) is arranged between a subfloor side-piece (7) and a spar (5) of the body base and **in that** the said reinforcing element (15) is arranged to extend transversely along the subfloor connections.

6. Vehicle (1) according to one of claims 1 to 5, the vehicle comprising a central tunnel, **characterized in that** at least one reinforcement element (15) is arranged between a subfloor stretcher (7) and the central tunnel, and **in that** the said reinforcement element (15) extends transversely over more than 80% of the distance between the said subfloor stretcher (7) and the central tunnel, preferably the said reinforcement element (15) is placed in abutment against the said subfloor stretcher (7).

7. Vehicle (1) according to one of claims 1 to 6, the vehicle (1) comprising two under-floor stretchers (7), the vehicle is **characterized in that** at least one reinforcement element (15) is arranged between the said under-floor stretchers (7), and **in that** the said reinforcement element (15) extends transversely over more than 80% of the distance between the said under-floor stretchers (7); preferably the said reinforcement element (15) is placed in abutment against the said under-floor stretchers (7).

8. Vehicle (1) according to claim 7, **characterized in that** the reinforcement element (15) extending between the underfloor side members (7) comprises at least one pair of brackets, more preferably a pair of double brackets.

9. Vehicle (1) according to one of claims 1 to 8, **characterized in that** at least one of the reinforcing elements (15) is a metal section, preferably of closed cross-section.
